(19) Europäisches Patentamt
European Patent Office
Office européen des brevets

(11) EP 2 057 789 B1

(12) # EUROPÄISCHE PATENTSCHRIFT

(45) Veröffentlichungstag und Bekanntmachung des Hinweises auf die Patenterteilung:
**01.05.2013 Patentblatt 2013/18**

(21) Anmeldenummer: **07788499.7**

(22) Anmeldetag: **21.08.2007**

(51) Int Cl.:
***H04W 28/10*** *(2009.01)*

(86) Internationale Anmeldenummer:
**PCT/EP2007/058659**

(87) Internationale Veröffentlichungsnummer:
**WO 2008/023007 (28.02.2008 Gazette 2008/09)**

(54) **STEUERUNG EINER LASTANPASSUNG IN EINEM FUNK-KOMMUNIKATIONSSYSTEM**
CONTROLLING LOAD MATCHING IN A RADIO COMMUNICATION SYSTEM
COMMANDE D’UNE ADAPTATION DE CHARGE DANS UN RÉSEAU DE COMMUNICATION RADIO

(84) Benannte Vertragsstaaten:
**AT BE BG CH CY CZ DE DK EE ES FI FR GB GR HU IE IS IT LI LT LU LV MC MT NL PL PT RO SE SI SK TR**
Benannte Erstreckungsstaaten:
**AL BA HR MK RS**

(30) Priorität: **23.08.2006 EP 06017580**

(43) Veröffentlichungstag der Anmeldung:
**13.05.2009 Patentblatt 2009/20**

(73) Patentinhaber: **Nokia Siemens Networks GmbH & Co. KG**
**81541 München (DE)**

(72) Erfinder:
- **LUNTER, Pavol**
  **85101 Bratislava (SK)**
- **ULRICH, Thomas**
  **67098 Bad Dürkheim (DE)**
- **WOLF, Martin**
  **03301 Liptovsky Hradok, SR (SK)**

(56) Entgegenhaltungen:
**EP-A- 1 585 265 EP-A2- 0 845 875**
**WO-A-03/049387**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).



Printed by Jouve, 75001 PARIS (FR)

## Beschreibung

Die Erfindung bezieht sich auf ein Verfahren zur Steuerung einer Lastanpassung in einem Funk-Kommunikationssystem, insbesondere in einem Mobilfunksystem nach einer Weiterentwicklung des UMTS-Standards.

Allgemein bekannt sind Mobilfunksysteme auf Basis beispielsweise des Standards GSM (Global System for Mobile Communications) oder des Standards UMTS (Universal Mobile Telecommunication System), deren Weiterentwicklungen von der so genannten 3GPP (3rd Generation Partnership Project) standardisiert werden. Als Weiterentwicklung des UMTS-Systems wird derzeit an der Standardisierung des so genannten UMTS-LTE (LTE: Long Term Evolution / Langzeitentwicklung) bzw. Evolved-UTRA (UTRA: Universal Terrestrial Radio Access / universeller terrestrischer Funkzugriff) gearbeitet. Einige der wichtigen Aspekte einer solchen Langzeitentwicklung umfassen eine reduzierte Latenz, höhere Teilnehmer-Datenraten, verbesserte Systemkapazität und Systemabdeckung und reduzierte Kosten für den Betreiber des Systems.

Im Zuge dieser Weiterentwicklung des UMTS-Standards wird auch die Struktur des so genannten Funkzugangsnetzes RAN (Radio Access Network) mit dem Ziel einer größeren Flexibilität und verringerter Latenz verändert. Basisstationen, welche als NodeB bzw. NB sowie in der Nomenklatur der UMTS-LTE als eNB bezeichnet werden, sind im Unterschied zu dem aktuellen UMTS-Standard für eine Verwaltung und Zuweisung von Funkressourcen auf der Funkschnittstelle (Radio Interface) zu Teilnehmerendgeräten UE (User Equipment) verantwortlich. Diese Funktion wurde vormals von der so genannten Funknetzsteuerung RNC (Radio Network Controller) wahrgenommen, welcher nunmehr als eigenständige Komponente des RAN nicht mehr existiert. Andere Funktionalitäten der Funknetzsteuerung werden hingegen von einer neuen Komponente, dem so genannten Zugangsnetzübergang aGW (Access Gateway), wahrgenommen. Basisstationen eNB und Zugangsnetzübergang aGW sind über ein Transportnetzwerk TN miteinander verbunden, auf welchem Übertragungen nach beispielsweise dem IP (Internet Protocol) erfolgen. Der Zugangsnetzübergang aGW wiederum ist mit einem wiederum IP-basierten Kernnetz verbunden. Diese Struktur des Funkzugangssystems ist beispielhaft in der FIG 1 dargestellt.

Ziel der Weiterentwicklung des UMTS-Standards ist zudem eine weitestgehende Vermeidung von Blockierungssituationen in den einzelnen Netzwerkkomponenten. Aufgrund der besonderen Eigenschaften der Funkschnittstelle, insbesondere die von Parametern wie Zeit, Ort, Geschwindigkeit von Teilnehmerendgeräten, Lastsituation in Funkzellen von Nachbarbasisstationen etc., abhängigen Übertragungseigenschaften von Signalen über die Funkschnittstelle, können jedoch weiterhin Blockierungssituationen in der Basisstation auftreten. Dies kann beispielsweise ein Überlauf eines Pufferspeichers in der Basisstation sein, der einer bestimmten Verbindung bzw. einem bestimmten Teilnehmerendgerät zugeordnet ist, aufgrund beispielsweise einer nicht ausreichenden Anzahl für die Übertragung von Daten auf dieser Verbindung zur Verfügung stehender Funkressourcen oder aber einer erforderlichen wiederholten Übertragung von Daten nach beispielsweise einem ARQ-Protokoll (Automatic Repeat Request). Der Pufferspeicher dient dabei dazu, Daten bis zu ihrer Übertragung über die Funkschnittstelle zwischenzuspeichern.

In solchen Situationen eines bevorstehenden oder bereits existierenden Überlaufs des einer Verbindung zugeordneten Pufferspeichers würde nach der derzeit vorgesehenen Herangehensweise die Basisstation bereits im Pufferspeicher befindliche oder neu von dem aGW eintreffende Datenpakete solange verwerfen, bis die Überlastsituation nicht mehr gegeben ist. Hierbei bleibt jedoch nachteilig die Tatsache unberücksichtigt, dass die Basisstation in der Regel keinerlei Kenntnis des Inhalts des Datenpakets bzw. dessen Wichtigkeit hat, da Datenpakete zwischen aGW und Teilnehmerendgerät verschlüsselt (engl. ciphering) und einer so genannten Kopfkomprimierung (engl. header compression), beispielsweise nach dem so genannten ROHC (Robust Header Compression) versehen werden. Die Basisstation, welche die verschlüsselten und komprimierten Datenpakete nicht entschlüsseln kann, wird somit potenziell auch Datenpakete verwerfen (engl. discard), welche für eine zuverlässige Entschlüsselung sowie Rückwandlung der Daten in dem Teilnehmerendgerät erforderlich sind. Dies kann nachteilig zu für den Teilnehmer deutlich vernehmbaren Beeinträchtigungen der Verbindungsqualität sowie gegebenenfalls zu einem Abbruch der Verbindung führen. Insbesondere kann es dabei zu einem Verbindungsabbruch kommen, wenn die Verschlüsselungsmechanismen in dem aGW und dem Teilnehmerendgerät nicht mehr synchron sind und auch seitens des Teilnehmerendgerätes keine Möglichkeiten mehr bestehen, diese Synchronität wiederherzustellen.

In Dokument WO 03/049387 A1 wird ein Verfahren zur Steuerung einer Übertragung von Datenpaketen in einem Funkkommunikationssystem, bei dem die Basisstation abhängig von einem aktuellen oder erwarteten Lastzustand eine erste Anzahl von Datenpaketen vor einer Übertragung über die Funkschnittstelle verwirft.

Zur Vermeidung derartiger Situationen kann beispielsweise die Verantwortung für eine Vermeidung von Überlastsituationen von derzeit allein der Basisstation auf den aGW erweitert werden. Dies würde eine Abstimmung zwischen der Basisstation und dem aGW erfordern, welcher bei einem Überlauf des Pufferspeichers in der Basisstation beispielsweise solange keine weiteren von anderen Systemkomponenten empfangene Datenpakete der Verbindung zu der Basisstation senden würde, bis die Überlastsituation dort beseitigt ist. Eine Speicherung solcher Datenpakete in dem aGW wäre entsprechend erforderlich. Dieser Lösung steht jedoch entgegen, dass nach derzeitigen Vorstellungen der aGW nicht mit Pufferspeichern ausgerüstet werden soll, und somit nicht zur ergänzenden Zwischenspeicherung von Datenpaketen ausgerüstet ist.

Es ist daher eine Aufgabe der Erfindung, ein Verfahren sowie Komponenten eines Funk-Kommunikationssystems anzugeben, welche eine effiziente Vermeidung von durch ein Verwerfen von Datenpaketen auftretenden kritischen Situationen unter Berücksichtigung der vorstehend beschriebenen Systemstruktur ermöglichen. Diese Aufgabe wird durch die Merkmale der unabhängigen Patentansprüche gelöst. Vorteilhafte Weiterbildungen der Erfindung sind abhängigen Patentansprüchen entnehmbar.

Nach dem erfindungsgemäßen Verfahren in einem Funk-Kommunikationssystem, welches zumindest einen zentralen Knoten sowie zumindest eine mit diesem verbundene Basisstation aufweist, werden von der Basisstation von dem zentralen Knoten empfangene verschlüsselte Datenpakete zu zumindest einem Teilnehmerendgerät über eine Funkschnittstelle übertragen, wobei von der Basisstation abhängig von einem aktuellen oder erwarteten Lastzustand eine erste Anzahl von Datenpaketen vor einer Übertragung über die Funkschnittstelle verworfen wird. Kennzeichnend fügt der zentrale Knoten einer zweiten Anzahl der nach einer Verschlüsselung zu dem Teilnehmerendgerät zu übertragenden Datenpakete eine jeweilige erste Information hinzu. Diese erste Information berücksichtig die Basisstation für eine Entscheidung darüber, ob ein jeweiliges Datenpaket verworfen wird oder nicht.

Vorteilhaft wird hierdurch sichergestellt, dass von der Basisstation bei einer einleitend beschriebenen Überlast nur verschlüsselte Datenpakete verwirft, welche für die Aufrechterhaltung der Verbindung ohne bzw. von geringer Bedeutung sind. Da der zentrale Knoten in Kenntnis des jeweiligen Inhalts der Datenpakete ist, da dieser vor der Verschlüsselung zur Übertragung zu dem Teilnehmerendgerät frei zugänglich ist, kann er eine jeweilige Relevanz der Datenpakete für die Verbindung bestimmen und entsprechend die erste Information hinzufügen. Im Gegensatz zu dem verschlüsselten Inhalt der Datenpakete kann die ergänzte erste Information von der Basisstation ausgewertet werden und der Entscheidung darüber, ob ein Datenpaket im beispielhaften Fall einer Überlast verworfen wird oder nicht, zugrunde gelegt werden. Vorzugsweise wird die zweite Anzahl der von dem zentralen Knoten mit der ersten Information versehenen Datenpakete größer der letztlich von der Basisstation verworfene ersten Anzahl Datenpakete gewählt. Hierdurch kann die Basisstation der jeweiligen Lastsituation angepasst individuell Datenpakete verwerfen.

Die der zweiten Anzahl Datenpakete hinzugefügte erste Information kann beispielsweise ein Statusbit (engl. Flag) in dem Kopffeld (engl. Header) einer so genannten Paketdateneinheit (PDU - Packet Data Unit) sein, welche das verschlüsselte Datenpaket trägt.

Gemäß der Erfindung signalisiert die Basisstation dem zentralen Knoten eine zweite Information über den aktuellen oder erwarteten Lastzustand. Mittels dieser zweiten Information, welche vorzugsweise periodisch oder abhängig von bestimmten Gegebenheiten, beispielsweise ein Überschreiten von einem oder mehreren Schwellwerten als Maß für den Füllstand des Pufferspeichers in der Basisstation, zu dem zentralen Knoten signalisiert wird, ist der zentrale Knoten vorteilhaft in Kenntnis des Lastzustandes der Basisstation.

Gemäβ der Erfindung steuert der zentrale Knoten abhängig von der empfangenen zweiten Information das Hinzufügen der ersten Information zu den verschlüsselten Datenpaketen. Dies kann beispielsweise derart erfolgen, dass die Anzahl der Datenpakete, welche mit einem ein mögliches Verwerfen anzeigenden Statusbit versehen werden, der aktuellen Überlastsituation angepasst wird, d.h. es werden von dem zentralen Knoten mindestens so viele Datenpakete mit einem solchen Statusbit versehen (sofern möglich), dass die Überlast des Pufferspeichers in der Basisstation innerhalb eines bestimmten Zeitraumes von der Basisstation abgebaut werden kann.

Nach einer weiteren darauf basierenden Weiterbildung verwirft der zentrale Knoten ergänzend eine dritte Anzahl Datenpakete bereits vor der Übertragung zu der Basisstation. Dies ist insbesondere vorteilhaft, wenn der zentrale Knoten aufgrund der Signalisierung der Lastsituation, sowie ergänzend in Kenntnis beispielsweise der Rate, mit der neue Datenpakete empfangen werden, bereits die Anzahl der von der Basisstation zu verwerfenden Datenpakete abschätzen kann. In diesem Fall kann mittels des Verwerfens einer bestimmten dritten Anzahl von Datenpaketen durch den zentralen Knoten die Belastung der Basisstation verringert werden, wobei es weiterhin der Basisstation obliegt, eine entsprechende erste Anzahl Datenpakete zur Verringerung der Überlast zu verwerfen.

Nach einer weiteren darauf basierenden Weiterbildung wählt der zentrale Knoten ein Verhältnis der dritten Anzahl zu der zweiten Anzahl Datenpakete abhängig von der signalisierten zweiten Information. Hierdurch kann sich der zentrale Knoten, wie vorstehend beschrieben, optimal der Lastsituation in der Basisstation anpassen.

Gemäß einer Weiterbildung der Erfindung wird die erste Information nur zu verschlüsselten Datenpaketen hinzugefügt, welche nachfolgend seitens der Basisstation verworfen werden können. Dies kann beispielsweise derart umgesetzt werden, dass das Statusbit nur gesetzt und mit zu der Basisstation übertragen wird, wenn es eine Verwerfbarkeit des Datenpakets anzeigt. Als eine alternative Ausgestaltung zu einem Hinzufügen eines Statusbits zu allen Datenpaketen und einer Unterscheidung nach dem Status des Bits (beispielsweise einem binären Wert, wobei 0 für nicht verwerfbar und 1 für verwerfbar steht) wird hierdurch vorteilhaft die Signalisierungslast auf der Schnittstelle zwischen zentralem Knoten und der Basisstation verringert.

Ein erfindungsgemäßes Funk-Kommunikationssystem sowie Komponenten eines solchen Systems weisen jeweils Mittel auf, mit denen die erfindungsgemäßen Verfahrensmerkmale verwirklicht werden können.

Die Erfindung wird nachfolgend anhand eines Ausführungsbeispiels näher dargestellt. Dabei zeigen

FIG 1 eine beispielhafte Struktur eines Funk-Kommunikationssystems einschließlich zweier Ablaufdiagramme,
FIG 2 ein Diagramm mit Statusübergängen in Komponenten des Funk-Kommunikationssystems,
FIG 3 ein beispielhaftes Zeitdiagramm des erfindungsgemäßen Verfahrens,
FIG 4 ein weiteres Diagramm mit Statusübergängen in Komponenten des Funk-Kommunikationssystems,
FIG 5 ein weiteres beispielhaftes Zeitdiagramm, und
FIG 6 Angaben der Bitraten auf den jeweiligen Schnittstellen zwischen den Komponenten des Funk-Kommunikationssystems.

In der FIG 1 ist die Struktur eines Funk-Kommunikationssystems, insbesondere nach dem aktuellen Stand der UMTS-LTE-Standardisierung, beispielhaft dargestellt. Ein so genannter Zugangsnetzübergang aGW (Access Gateway) steht mit weiteren Komponenten des Systems bzw. anderen Systemen über ein IP-basiertes Netzwerk in Verbindung. Aus diesem Netzwerk IP empfängt das aGW eingehenden Datenverkehr (Incoming traffic) in Form von Datenpaketen. Diese eingehenden Datenpakete werden in dem aGW weiter behandelt, wie es nachfolgend noch detailliert dargestellt wird. Das aGW ist weiterhin mit zumindest einer Basisstation eNB über ein Transportnetzwerk TN verbunden. Die beispielhaft dargestellt Basisstation eNB ist wiederum über eine Funkschnittstelle (Radio Interface), welche als die Datenrate begrenzende und daher kritische Instanz (bottleneck) betrachtet wird, mit einem Teilnehmerendgerät UE verbunden.

Es sei angenommen, dass zwischen einer nicht dargestellten Quelle von Datenpaketen, beispielsweise einem weiteren Teilnehmerendgerät oder einem Server, und dem dargestellten Teilnehmerendgerät UE eine Kommunikationsverbindung besteht, auf der zumindest Datenpakete zu dem dargestellten Teilnehmerendgerät UE übertragen werden. Diese Datenpakete dienen einer Anwendung (Application), beispielsweise eine so genannte Video-Streaming-Anwendung, in dem Teilnehmerendgerät UE.

Das aGW empfängt auf dieser Verbindung somit Datenpakete für das Teilnehmerendgerät UE, welches es zu der Basisstation eNB, in dessen Funkabdeckungsbereich bzw. Funkzelle sich das Teilnehmerendgerät UE aktuell befindet, weiterleitet. In dem aGW erfolgt nach einer Prüfung in einem ersten Schritt 1, welcher nachfolgend noch detailliert beschrieben wird, zunächst eine Komprimierung (Header compression) des Kopffeldes der Datenpakete bzw. der die Datenpakete transportierenden Paketdateneinheiten (PDU - Packet Data Unit) sowie eine Verschlüsselung (Ciphering) der Datenpakete. Diese Komprimierung sowie Verschlüsselung existiert zwischen dem aGW und dem Teilnehmerendgerät UE, entsprechend weist das Teilnehmerendgerät UE Mittel zum Entschlüsseln (Deciphering) und Dekomprimieren (Decompression) der empfangenen Datenpakete auf. Nach einem zweiten Schritt 2, welcher ebenfalls nachfolgend näher beschrieben wird, überträgt der aGW die Datenpakete über das Transportnetzwerk TN zu der Basisstation eNB. In der Basisstation eNB werden die komprimierten und verschlüsselten Datenpakete nach einem nachfolgend erläuterten dritten Schritt 3 in einem Pufferspeicher (Buffer) zwischengespeichert, bevor sie über die Funkschnittstelle (Radio Interface) in von der Basisstation eNB zugewiesenen Funkressourcen zu dem Teilnehmerendgerät UE übertragen werden. Der Pufferspeicher (Buffer) bzw. ein bestimmter Bereich eines zentralen Pufferspeichers in der Basisstation eNB wird der Verbindung zugeordnet und beispielsweise abhängig von der erwarteten Datenrate oder einer Dienstequalität dimensioniert.

Wie einleitend beschrieben, weist die die Datenpakete von dem aGW über das Transportnetzwerk TN empfangende Basisstation eNB somit keinerlei Einrichtungen oder Mittel zum Dekomprimieren und Entschlüsseln der Datenpakete auf, sodass sie auch nicht anhand des Inhalts der Datenpakete oder bestimmter, beispielsweise in dem komprimierten Kopffeld befindlicher, Parameter wie Angaben über Dienstqualitätsanforderungen o.ä. auf eine potenzielle Verwerfbarkeit der Datenpakete für den Fall einer Überlast schließen kann. Die Basisstation eNB würde daher mit nicht dargestellten Mitteln zur Vermeidung einer Überlast Datenpakete vor der Übertragung zu dem Teilnehmerendgerät UE bzw. bereits vor der Speicherung in dem Pufferspeicher verwerfen, mit den einleitend genannten nachteiligen Folgen beispielsweise eines Verbindungsabbruchs aufgrund eines Verwerfens von für die Aufrechterhaltung der Verbindung notwendiger Datenpakete.

Dieses Problem kann nach der Erfindung mittels zweier Verfahren gelöst werden, welche vorteilhaft sowohl alleine als auch in Kombination miteinander verwirklicht werden können.

Das erste erfindungsgemäße Verfahren betrifft die in FIG 1 dargestellten Schritte 2 und 3. Gemäß dem Schritt 2 werden in dem aGW nach der Komprimierung des Kopffeldes (Header compression) sowie der Verschlüsselung (Ciphering) die Datenpakete markiert (Marking). Da diese Markierung nach der Komprimierung und Verschlüsselung erfolgt, kann die Basisstation eNB diese Information auswerten. Das Markieren der Datenpakete erfolgt beispielsweise mittels eines Statusbits, welches die Verwerfbarkeit des jeweiligen Datenpakets anzeigt. Dieses Statusbit wird nachfolgend auch als Discard Eligibility (DE) Bit bezeichnet. Das Statusbit kann von dem aGW vorteilhaft gesetzt bzw. hinzugefügt werden, da das aGW auf den vollständigen Datensatz der Datenpakete zugreifen kann, und somit vorteilhaft in der Lage ist, eine Relevanz für die Aufrechterhaltung der Verbindung zu ermitteln bzw. abzuschätzen. Entsprechend zeigt das aGW der Basisstation eNB mit dem Statusbit an, welches Datenpaket von dieser verworfen werden kann, sofern ein Verwerfen aufgrund einer Überlast erforderlich ist. Bei binären Werten des Statusbits kann dabei eine binäre 0 für nicht verwerfbar und eine binäre 1 für verwerfbar stehen. Alternativ kann jedoch das Statusbit auch nur übertragen werden, wenn eine Verwerfbarkeit des Datenpakets gegeben ist. Hierdurch kann die Signalisierungslast auf der Schnittstelle zwischen aGW und Basisstation eNB vorteilhaft verringert werden.

In der Basisstation eNB erfolgt in dem dritten Schritt 3, wie in dem Ablaufdiagramm unterhalb der Basisstation eNB beispielhaft angegeben, nach Empfang eines Datenpakets von dem aGW eine Entscheidung darüber, ob das empfangene Datenpaket in dem Pufferspeicher (Buffer) zur Übertragung über die Funkschnittstelle gespeichert (Packet store) oder verworfen (discard) wird. Zu dieser Entscheidungsfindung in dem dritten Schritt 3 ist ergänzend ein Entscheidungsdiagramm angegeben. Nach einem Empfang eines oder mehrerer Datenpakete (Packets received) wird zunächst geprüft, ob eine aktuelle oder angesichts des bzw. der empfangenen Datenpakete erwartete Last (Load) des Pufferspeichers (Buffer), welche in der Basisstation eNB bestimmt wird (Load measurement), mit einem vorgegebenen Schwellwert (threshold) verglichen. Die Definition des Schwellwertes bzw. mehrerer Schwellwerte wird nachfolgend zu weitere Figuren noch näher erläutert. Übersteigt die aktuelle oder erwartete Last nicht (No) den Schwellwert, so wird das Datenpaket zu dem Pufferspeicher weitergeleitet (Move to buffer). Übersteigt (Yes) hingegen die Last bereits den Schwellwert, so wird nachfolgend geprüft, ob es sich um ein mit einem gesetzten Statusbit versehenes Datenpaket (DE packet) handelt. Ist dies nicht (No) der Fall, d.h. das Datenpaket darf nicht von der Basisstation eNB verworfen werden, so wird es wiederum zu dem Pufferspeicher weitergeleitet (Move to buffer). Handelt (Yes) es sich hingegen um ein mit dem Statusbit versehenes Datenpaket, so wird es von der Basisstation eNB verworfen (Discard), um die Überlast in dem Pufferspeicher zu verringern bzw. zu beseitigen.

Ergänzend zu diesen Mechanismen kann in der Basisstation eNB aus den Messungen der Last (Load measurement) des Pufferspeichers eine Signalisierung (Signaling) abgeleitet werden, welche zu dem aGW übertragen wird. Diese Signalisierung kann beispielsweise als ein so genannter Überlastindikator, nachfolgend als Buffer Overflow Prediction (BOP) Indicator bezeichnet, verwirklicht sein. Dieser Indikator (BOP) wird beispielsweise zu dem aGW signalisiert, wenn ein bestimmter Schwellwert des Pufferspeichers überschritten wurde, und somit eine potenzielle Überlast des Pufferspeichers absehbar ist. Bei der Festlegung des Schwellwertes sollte dabei berücksichtigt werden, dass Folgen der Signalisierung erst nach Ablauf eines bestimmten Zeitraumes für die Basisstation eNB spürbar werden. So kann der Schwellwert beispielsweise nach der folgenden Formel bestimmt werden:

$$TL\ [Pakete] \leq TBS\ [Pakete] - TBR\ [Pakete/s] * RTT\ [s],$$

mit
TL = Schwellwert (Threshold Level)
TBS = Gesamtgröße des Pufferspeichers (Total Buffer Size)
TBR = Übertragungsbitrate, d.h. Rate der zwischen dem aGW und der Basisstation eNB übertragenen Daten (Transmitted Bit Rate)
RTT = Zeit für Hin- und Rückübertragung (Round Trip Time), wobei RTT = 2 * OTT, mit
OTT = einfache Übertragungszeit (One Trip Time), und
s = Sekunde.

Der Schwellwert TL wird also derart bemessen, dass vor einem Wirksamwerden der Signalisierung nach dem Zeitraum RTT kein Überlauf des Pufferspeichers durch eine zu große Anzahl eintreffender Datenpakete auftreten kann.

Der Indikator wird vorzugsweise nur dann von der Basisstation eNB zu dem aGW signalisiert, wenn eine Überlastsituation besteht bzw. vorhersehbar ist. Hierdurch wird, insbesondere angesichts eine großen Anzahl in gleicher Weise parallel behandelter Verbindungen, die Signalisierungslast zwischen den beiden Komponenten vorteilhaft verringert. Alternativ kann jedoch in gleicher Weise eine periodische Signalisierung der Lastsituation erfolgen, sodass das aGW periodisch in Kenntnis der aktuellen Lastsituation in der Basisstation eNB ist, wobei in diesem Fall der Indikator beispielsweise mehrere Stati annehmen kann. Derartige Stati können beispielsweise Anzeiger für Überlast/keine Überlast und/oder Überschreiten/Unterschreiten des Schwellwertes x,y,z sein.

Nach Empfang und Auswertung (Signaling evaluation) des Indikators beginnt das aGW gemäß vorstehender Beschreibung im zweiten Schritt 2 mit der Markierung (Marking) von verschlüsselten Datenpaketen mittels Statusbits.

Alternativ oder ergänzend zu dem Markieren von potenziell verwerfbaren Datenpaketen in Schritt 2 kann seitens des aGW in dem Schritt 1 auch selbst ein Verwerfen (Discarding) von Datenpaketen erfolgen. Dies kann wiederum abhängig von dem signalisierten Indikator bzw. Status abhängig gesteuert werden. Vorteilhaft wird durch das Verwerfen von Datenpaketen bereits in dem aGW bereits die Last auf der Schnittstelle zwischen aGW und der Basisstation eNB verringert, d.h. die Basisstation eNB muss allgemein eine geringere Anzahl Datenpakete der Verbindung behandeln. Zudem wird die Stabilität der Verbindung selbst nicht beeinträchtigt, da beispielsweise die Nummerierung der Datenpakete erst in Verbindung mit der Komprimierung des Kopffeldes und der Verschlüsselung den Datenpaketen hinzugefügt wird und somit, bis auf gegebenenfalls weitere von der Basisstation eNB verworfene markierte Datenpakete, bis zum Empfang durch das Teilnehmerendgerät UE bestehen bleibt. Allerdings kann ein Verwerfen von Datenpaketen bereits in dem aGW gegebenenfalls nachteilig einer aktuellen Lastsituation entgegenwirken. Wie vorstehend beschrieben, existiert eine Verzögerung in der Größenordnung von RTT, bevor das Verwerfen in dem aGW Auswirkungen auf den Lastzustand in der Basisstation eNB hat. Innerhalb dieses Zeitraums kann sich jedoch die Lastsituation in der Basisstation eNB bereits derart verändert haben, beispielsweise durch kurzfristige Nutzung weiterer Übertragungsressourcen auf der Funkschnittstelle, dass ein Verwerfen von Datenpaketen nach dem dann aktuellen Lastzustand nicht mehr erforderlich wäre. In diesem Fall würden also Datenpakete von dem aGW verworfen werden, welche mit den zur Verfügung stehenden Ressourcen problemlos zu dem Teilnehmerendgerät UE übertragbar wären. Hierdurch kann beispielsweise die Dienstqualität (QoS - Quality of Service) der Verbindung gegebenenfalls nachteilig beeinträchtigt werden. Liegt die Entscheidung, ob ein Datenpaket verworfen wird oder nicht hingegen bei der Basisstation eNB, so kann diese unmittelbar, d.h. annähernd verzögerungsfrei abhängig von einer aktuellen Lastsituation darüber entscheiden, ob und welche Anzahl Datenpakete verworfen werden müssen, um eine Überlast des Pufferspeichers zu verhindern.

Unterhalb der Darstellung des aGW in der FIG 1 ist ein weiteres Ablaufdiagramm mit den einzelnen Schritten und Entscheidungen des ersten Schrittes 1 beispielhaft dargestellt. Dabei wird auch auf unterschiedliche Stati des aGW Bezug genommen, welche im Zusammenhang mit der FIG 2 noch näher erläutert werden.

Zunächst wird bei Empfang eines Datenpakets von dem IP-Netzwerk geprüft, ob sich der aGW in dem Status 0 (state 0) befindet. Ist dies der Fall (Yes), so wird das Datenpaket zur nachfolgenden Komprimierung des Kopffeldes und Verschlüsselung weitergeleitet. Ist das aGW hingegen nicht (No) in dem Status 0, so wird anschließend geprüft, ob es sich in dem Status 1 (s1, state 1) befindet. Ist dies nicht (No) der Fall, so befindet sich das aGW in einem Status 3, nach welchem bestimmte bzw. eine bestimmte Anzahl Datenpakete bereits in dem aGW verworfen werden (Discard packet). Befindet sich das aGW hingegen in dem Status 1 (s1, state 1), so wird nachfolgend geprüft, ob das Datenpaket nach Verschlüsselung (ciphering) und Komprimierung (compression) verwerfbar ist (OK). Ist das Datenpaket nicht (No) potenziell von der Basisstation eNB verwerfbar, da es beispielsweise für die Aufrechterhaltung der Verbindung von großer Bedeutung ist, so wird es ohne ergänzende Markierung zu der Basisstation eNB übertragen (Send packet). Ist es nach der Prüfung hingegen verwerfbar (Yes), so wird es nach Komprimierung des Kopffeldes sowie Verschlüsselung markiert (Label packet), d.h. das Statusbit hinzugefügt, und erst anschließend zu der Basisstation eNB übertragen (Send packet).

FIG 2 zeigt Diagramme für die Basisstation eNB und das aGW, in denen die einzelnen Statusübergänge sowie Stati beispielhaft dargestellt sind. Das linke Diagramm bezüglich der Basisstation eNB behandelt dabei die Bestimmung der Lastsituation sowie eine daraus abgeleitete Generierung von Signalisierungen, währenddessen das rechte Diagramm die Reaktionen des aGW auf diese Signalisierungen der Basisstation eNB aufzeigt. Zunächst sei angenommen, dass sich sowohl die Basisstation eNB als auch das aGW jeweils in dem Status 0 (state 0) befinden, d.h. die Basisstation eNB ist in der Lage, alle von dem aGW empfangenen Datenpakete in dem Pufferspeicher zu speichern (store all), ohne absehbar eine Überlast des Pufferspeichers hervorzurufen, und das aGW leitet alle von dem IP-Netzwerk empfangenen Datenpakete ohne erfindungsgemäße Behandlung zu der Basisstation eNB über das Transportnetzwerk TN weiter.

Ermittelt die Basisstation eNB nun, dass die aktuelle Last des Pufferspeichers einen Schwellwert übersteigt (load>threshold), so signalisiert sie dem aGW mittels eines Indikators (signal BOP+), beispielsweise ein Statusbit mit einem binären Wert 1, den Bedarf eines Statuswechsels sowohl der. Basisstation eNB als des aGW in den Status 1 (state 1) angibt. Nach Empfang des Indikator (BOP+) wechselt das aGW entsprechend in den Status 1 (state 1) und beginnt mit dem Hinzufügen von Statusbits zu einer Anzahl von verwerfbaren Datenpaketen und einem Übertragen dieser markierten Datenpakete zu der Basisstation eNB (mark with DE, send) bzw. mit dem Übertragen der nicht verwerfbaren Datenpakete (forward the rest) entsprechend vorstehender Beschreibung zu FIG 1. Einen entsprechenden Statuswechsel in den Status 1 (state 1) führt auch die Basisstation eNB durch, wobei diese abhängig von der aktuellen oder erwarteten Überlast bzw. Blockierung mit dem Statusbit versehene Datenpakete verwirft (discard DE packets according to congestion).

Kann mittels dieser Mechanismen bereits erreicht werden, dass die Last des Pufferspeichers, nach beispielsweise einem bestimmten Zeitraum, wieder unter den Schwellwert fällt (load<threshold), so signalisiert die Basisstation eNB mittels des Indikators (signal BOP-), diesmal beispielsweise mittels des binären Wertes 0 des Statusbits, dem aGW, dass ein Statuswechsel zurück zu dem Ursprungsstatus Status 0 (state 0) erfolgen kann. Entsprechend führt nach Empfang und Auswertung der Signalisierung (BOP-) das aGW diesen Statuswechsel in den Status 0 (state 0) durch.

Liegt die Last des Pufferspeichers nach dem bestimmten Zeitraum hingegen weiterhin über dem Schwellwert (discard metric>threshold), so signalisiert die Basisstation eNB dem aGW abermals mittels des Indikators (signal BOP+), beispielsweise wiederum mittels des Statusbits mit einem binären Wert 1, dass ein weiterer Statuswechsel in den Status 2 (state 2) erforderlich ist. Nach Empfang dieses neuerlichen Indikators (BOP+) wechselt das aGW entsprechend in den Status 2 (state 2) und beginnt entsprechend vorstehender Beschreibung zu FIG 1 mit einer Verwerfung einer Anzahl von als verwerfbar identifizierter Datenpakete (discard appropriate packets, forward the rest) bereits vor einer Übertragung zu der Basisstation eNB sowie einer Weitergabe von Datenpaketen zu der Basisstation eNB, welche nicht für ein Verwerfen geeignet sind. Mittels dieser Maßnahme in dem aGW sollte die dann ebenfalls im Status 2 (state 2) befindliche Basisstation eNB dann wieder in der Lage sein, alle von dem aGW empfangenen Datenpakete zu speichern (store all, discarded in the aGW).

Kommt es in dieser Folge tendenziell oder real zu einer Absenkung der Last (load decreasing) in der Basisstation eNB auf ein Niveau, welches bereits durch Maßnahmen des Status 1 behandelt werden kann, so signalisiert die Basisstation eNB dem aGW mittels des Indikators (signal BOP-), beispielsweise wiederum mittels des Statusbits mit einem binären Wert 0, einen Statuswechsel von dem Status 2 (state 2) zurück zu dem Status 1 (state 1). Nach Empfang und Auswertung dieses Indikators (BOP-) wechselt das aGW entsprechend zurück in den Status 1 (state 1). Für einen nachfolgenden Statuswechsel zurück in den Status 0 siehe vorstehende Beschreibung.

Nach einer nicht dargestellten Alternative kann der Status 2 beispielsweise auch Maßnahmen des Status 1 beinhalten. Dies würde bedeuten, dass seitens des aGW nur eine bestimmte Anzahl der potenziell verwerfbaren Datenpakete bereits in dem aGW verworfen werden, wohingegen die verbleibende Anzahl potenziell verwerfbarer Datenpakete entsprechend dem Verfahren in dem Status 1 mit einem Statusbit zur Verwerfung durch die Basisstation eNB markiert werden. Auch die Basisstation eNB würde in dem Status 2 abhängig von der aktuellen Lastsituation ergänzende Datenpakete verwerfen. Vorteilhaft wird hierdurch sichergestellt, dass nur eine für die Verhinderung der Überlast des Pufferspeichers erforderliche Gesamtzahl Datenpakete verworfen wird. Der Wechsel des aGW von dem Status 1 in den Status 2 könnte dabei auch unabhängig von einer neuerlichen Signalisierung eines Indikators durch die Basisstation eNB erfolgen. Beispielsweise wird nach einem vorgegebenen Zeitintervall, in dem das aGW in dem Status 1 befindlich war, automatisch in den Status 2 gewechselt, welcher beispielsweise ebenfalls für einen bestimmten Zeitraum beibehalten wird, bevor wieder automatisch in den Status 1 zurückgewechselt wird. In diesem Fall würde die Basisstation eNB bei einem autonomen Wechsel des aGW in den Status 2 nicht ebenfalls in den Status 2 wechseln müssen, sondern könnte vielmehr weiter nach den Mechanismen des Status 1 verfahren. Eine Signalisierung eines Indikators (BOP-) würde das aGW, welches sich in dem Status 2 befindet, unmittelbar in den Ursprungsstatus 0 zurückwechseln lassen.

In der FIG 3 ist, Bezug nehmend auf vorstehende Erläuterungen zu den FIG 1 und FIG 2, ein beispielhaftes Zeitdiagramm dargestellt, welches die Abhängigkeiten und Auswirkungen der einzelnen Signalisierungen, Statuswechsel und damit zusammenhängender Verfahren verdeutlichen. Das Diagramm stellt die Last des Pufferspeichers (Buffer Load [bits]) der Basisstation eNB über der Zeit (Time [s]) mittels einer durchgehenden Linie dar. Ergänzend definiert eine erste waagerecht gestrichelte Linie eine Größe des Pufferspeichers (Buffer size) sowie eine dazu parallele zweite gestrichelte Linie einen vorgegebenen Schwellwert (Threshold). Weiterhin sind auf den unteren Zeitachsen die jeweilige Statusübergänge in der Basisstation eNB und in dem aGW ergänzend dargestellt.

Da sich die Last des Pufferspeichers zunächst unterhalb des Schwellwertes befindet, die Schwankungen der Last sind durch variable Übertragungen auf der Funkschnittstelle zu dem Teilnehmerendgerät UE bedingt, befinden sich sowohl die Basisstation eNB als auch das aGW in dem Status 0. Überschreitet nun, beispielsweise verursacht durch sich verschlechternde Übertragungseigenschaften der Funkschnittstelle, zu einem Zeitpunkt die Last des Pufferspeichers den vorgegebenen Schwellwert (Threshold crossed), so wechselt die Basisstation eNB in den Status 1 (-> s1) und signalisiert zu dem aGW einen Indikator zum Wechseln in den nächst höheren Status (Send BOP+). Nach einer einfachen Laufzeit OTT des Signals empfängt das aGW den Indikator (Receive BOP+) und wechselt ebenfalls in den Status 1 (-> s1). Entsprechend vorstehender Beschreibung beginnt das aGW nach einem Wechsel in den Status 1 mit einem Markieren von verwerfbaren Datenpaketen vor einer Übertragung zu der Basisstation eNB. Diese markierten Datenpakete werden nach einer doppelten Laufzeit RTT (einschließlich einer Verarbeitungszeit in dem aGW) erstmals von der Basisstation eNB empfangen (Marked packets arrived), wobei während des Zeitraums RTT die Last des Pufferspeichers beispielhaft weiter ansteigt. Die Basisstation eNB beginnt nun, markierte Datenpakete zu verwerfen, um die Last des Pufferspeichers zu verringern.

Bleibt die Last des Pufferspeichers, wie dargestellt, trotz der Maßnahmen der Basisstation eNB während eines vorgegebenen Zeitintervalls TI (Time Interval) weiterhin über dem Schwellwert (Marked packets discarded, but load keeps high), so entscheidet die Basisstation eNB (Decision to discard in the aGW) in einem nächsten Schritt, einen weiteren Statuswechsel in den Status 2 (-> s2) zu vollziehen. Dies signalisiert die Basisstation eNB dem aGW wiederum mittels eines Indikators zum Wechseln in den nächst höheren Status (Send BOP+). Nach wiederum einer einfachen Laufzeit OTT wird dieser Indikator von dem aGW empfangen (Receive BOP+) und ausgewertet, und ein entsprechender Statuswechsel (-> s2) in den Status 2 vollzogen. Im Anschluss an den Wechsel in den Status 2 beginnt das aGW, eine Anzahl Datenpakete bereits vor der Weitergabe an die Basisstation zu verwerfen.

Dieses Verwerfen von Datenpaketen bereits in dem aGW und der damit einhergehende Empfang von nicht zum potenziellen Verwerfen markierten Datenpaketen wird für die Basisstation eNB nach der Laufzeit RTT spürbar (Unmarked packets, but discarded already in the aGW). In Folge des Verwerfens in dem aGW nimmt nach dem dargestellten Beispiel die Last des Pufferspeichers tendenziell ab (Load has decreasing tendency). Nachdem dies nach einem vorgegebenen Zeitintervall TI weiterhin der Fall ist, entscheidet die Basisstation eNB einen Wechsel zurück in den Status 1, dessen Maßnahmen nachfolgend eine größere Effizienz bei dem Verwerfen von Datenpaketen versprechen (Marking may be more efficient). Daraufhin führt die Basisstation eNB einen entsprechenden Statuswechsel (-> s1) zurück in den Status 1 durch und signalisiert dies mittels eines Indikators (Send BOP-) dem aGW. Nach der Laufzeit OTT, in welcher das aGW weiterhin Datenpakete verwirft, empfängt das aGW den Indikator und führt ebenfalls einen Statuswechsel zurück in den Status 1 durch.

Nach dem Beispiel der FIG 3 unterschreitet kurze Zeit nach Empfang des Indikators durch das aGW die Last des Pufferspeichers den Schwellwert (Below the threshold - stop discarding). Dieses Unterschreiten nimmt die Basisstation eNB zum Anlass, einen weiteren Statuswechsel zurück in den Status 0 durchzuführen (-> s0) und dies mittels eines Indikators zu dem aGW zu signalisieren (Send BOP-). Nach wiederum der Laufzeit OTT empfängt das aGW die Signalisierung (Receive BOP-) und führt in dessen Folge ebenfalls einen Statuswechsel zurück zu dem Status 0 durch (-> s0).

In den FIG 4 und 5 sind Abwandlungen der Beispiele der FIG 2 und 3 dargestellt. Im Unterschied zu der Definition eines einzigen Schwellwertes (Threshold) sowie eines Zeitintervalls (TI) in den FIG 2 und 3, von dessen Über- und Unterschreiten bzw. Status während oder nach dessen Ablauf ein Statuswechsel abhängig gemacht wurde, werden die Statuswechsel von zwei definierten Schwellwerten abhängig durchgeführt.

Während der Statusübergang in der FIG 4 von dem Status 0 zu dem Status 1 und zurück sowohl in der Basisstation eNB als auch in dem aGW mit dem Statusübergang in der FIG 2 identisch ist, d.h. nach einem Über- bzw. Unterschreiten eines ersten Schwellwertes erfolgt, wird nach der FIG 4 ein Statusübergang von dem Status 1 zu dem Status 2 in der Basisstation eNB erst nach Überschreiten eines zweiten Schwellwertes (load > threshold2) und von dem Status 2 zurück zu dem Status 1 erst nach Unterschreiten des zweiten Schwellwertes (load < threshold2) initiiert.

Die Konsequenzen dieses veränderten Statusübergangs sind beispielhaft in FIG 5 dargestellt. Der zweite beispielhafte Schwellwert (Threshold 2) ist als eine waagerecht gestrichelte Linie oberhalb der Linie des ersten Schwellwertes (Threshold 1) in der FIG 5 dargestellt. Ausgangssituation ist wiederum der Status 0 sowohl in der Basisstation eNB als auch in dem aGW.

Nachdem die bestimmte Last des Pufferspeichers der Basisstation eNB den ersten Schwellwert überschreitet (1st threshold crossed), führt die Basisstation eNB einen Statuswechsel in den Status 1 durch (-> s1) und signalisiert dies mittels eines Indikators dem aGW (Send BOP+). Nach der Laufzeit OTT empfängt das aGW die Signalisierung (Receive BOP+) und führt ebenfalls einen Statuswechsel in den Status 1 durch (-> s1). Noch bevor die Auswirkung des Statuswechsels, d.h. das Markieren von verwerfbaren Datenpaketen durch das aGW, nach einem Zeitraum RTT für die Basisstation eNB spürbar werden (marked packets arrived), überschreitet nach dem Beispiel der FIG 5 jedoch die Last bereits den zweiten Schwellwert (2nd threshold crossed). Dies veranlasst die Basisstation eNB dazu, eine Verwerfung von Datenpaketen bereits in dem aGW anzufordern (request discarding in the aGW). Dies erfolgt mittels eines Statuswechsels von dem bestehenden Status 1 in den Status 2 (-> s2) sowie einer Signalisierung zu dem aGW mittels eines Indikators (Send BOP+). Dieser empfängt nach der Laufzeit OTT die Signalisierung (Receive BOP+) und führt einen entsprechenden Statuswechsel in den Status 2 durch (-> s2). Infolge dieses Statuswechsels beginnt das aGW, Datenpakete bereits vor der Weitergabe an die Basisstation eNB zu verwerfen. Diese Maßnahme wird für die Basisstation eNB wiederum erst nach dem Zeitraum RTT spürbar, d.h. erst nach diesem Zeitraum empfängt die Basisstation eNB wieder unmarkierte Datenpakete von dem aGW (Unmarked packets, but discarded already in the aGW). Während dieses Zeitraums, d.h. bis zum Empfang der ersten nicht zum potenziellen Verwerfen markierten Datenpakete kann die Basisstation eNB gegebenenfalls bereits gespeicherte sowie noch eintreffende markierte Datenpakete entsprechend dem Status 1 selbst verwerfen, um die Last in dem Pufferspeicher zu verringern.

Nach dem Beispiel der FIG 5 wird insbesondere infolge des Verwerfens von Datenpaketen bereits in dem aGW die Last des Pufferspeichers verringert, bis sie nach einer unbestimmten Zeit den zweiten Schwellwert wieder unterschreitet (2nd threshold crossed). Dies führt zu einer Entscheidung in der Basisstation eNB, das Verwerfen in dem aGW wieder aufzuheben und von diesem Datenpakete wieder zum potenziellen Verwerfen durch die Basisstation eNB markieren zu lassen. Diese Entscheidung wird in der Basisstation eNB durch einen Statuswechsel von dem aktuellen Status 2 zurück in den Status 1 (-> s1) sowie einer entsprechenden Signalisierung eines Indikators zu dem aGW (Send BOP-) umgesetzt. Nach einer Laufzeit OTT wird diese Signalisierung von dem aGW empfangen und durch einen Statuswechsel zurück in den Status 1 auf in dem aGW umgesetzt.

Während der Laufzeit OTT bis zum Empfang der Signalisierung verwirft das aGW weiterhin Datenpakete, sodass es nach dem Beispiel der FIG 5 zu einer weiteren Verringerung der Last des Pufferspeichers kommt. Diese Last unterschreitet nach einer unbestimmten Zeit auch den ersten Schwellwert (1st threshold crossed), welches in der Basisstation eNB zu der Entscheidung führt, einen Statuswechsel zurück in den Status 0 durchzuführen mit einem entsprechenden Beenden des Markierens von potenziell verwerfbaren Datenpaketen durch das aGW (stop marking). Die Basisstation eNB setzt diese Entscheidung durch einen Statuswechsel in den Status 0 (-> s0) um und signalisiert diesen Statuswechsel mittels einer Indikators zu dem aGW (Send BOP-), welches nach Empfang der Signalisierung (Receive BOP-) und Auswertung ebenfalls einen Statuswechsel in den Status 0 durchführt (-> s0).

Neben einer Definition von zwei Schwellwerten nach dem Beispiel der FIG 4 und 5 kann auch eine größere Anzahl Schwellwerte definiert werden. Diese definieren bei einem jeweiligen Über- bzw. Unterschreiten beispielsweise ein Verhältnis von bereits in dem aGW verworfenen und zum potenziellen Verwerfen markierten Datenpaketen. Beispielsweise könnten bei einem Überschreiten eines ersten, unteren Schwellwertes zunächst 100% der potenziell verwerfbaren Datenpakete markiert werden, währenddessen bei einem Überschreiten eines zweiten Schwellwertes nur noch 80% markiert, die restlichen 20% hingegen bereits in dem aGW verworfen werden. Bei einem Überschreiten eines dritten Schwellwertes kann dieses Verhältnis dann zu 60%/40% verändert werden, usw.

Alle Schwellwerte können selbstverständlich auch mit einer Hysterese versehen werden, welche einen stetigen Statuswechsel für den Fall, dass die Last im Bereich eines Schwellwertes schwankt, vorteilhaft verhindern kann. Eine Dimensionierung einer derartigen Hysterese sowie die Festlegung der Schwellwerte selbst obliegt dem Kenntnisstand des einschlägigen Fachmanns, beispielsweise basierend auf statistischen Analysen des Verhaltens des Systems.

Eine Entscheidung über die Anzahl Datenpakete, welche bereits in dem aGW verworfen werden muss, um eine Überlast des Pufferspeichers in der Basisstation eNB zu verhindern, kann alternativ auch seitens des aGW selbst getroffen werden. Angenommen, die Basisstation eNB ist in dem Beispiel der FIG 1 in der Lage, nach bzw. während des Überschreitens des Schwellwertes, und beispielsweise in Kenntnis der Übertragungseigenschaften der Funkschnittstelle, zu ermitteln, mit welcher Datenrate Datenpakete zu dem Teilnehmerendgerät UE übertragen werden können. Diese ermittelte Datenrate kann dann von der Basisstation eNB zu dem aGW signalisiert werden, beispielsweise mittels einer Anzahl von Indikatoren für bestimmte diskrete Werte oder mittels eines absoluten Wertes. Basierend auf dieser Information über die unterstützte Datenrate der Verbindung und in Kenntnis der Datenrate der von dem IP-Netzwerk empfangenen Datenpakete der Verbindung berechnet das aGW, welche Anzahl Datenpakete verworfen werden muss bzw. mit welcher Datenrate Datenpakete zu der Basisstation eNB übertragen werden können, um die von der Basisstation eNB aktuell unterstützte Datenrate zu realisieren, ohne jedoch eine Überlast des Pufferspeichers zu verursachen und mit dem Ziel, die Last wieder unterhalb des Schwellwertes zu bringen.

Eine Berechnung der Datenrate auf der Schnittstelle (S1) zwischen dem aGW und der Basisstation eNB erfolgt beispielsweise nach der Formel:

$$TBR(n) = MBR(n) + MinBR = ABR(n-1),$$

mit

MinBR - einer minimalen Datenrate auf der Funkschnittstelle (Minimal Bit Rate), welche beispielsweise auf Basis von Statistiken über Übertragungseigenschaften ermittelt werden kann ABR - einer aktuell verfügbaren Datenrate auf der Funkschnittstelle (Available Bit Rate), wobei ABR ≥ MinBR ist

TBR - Übertragungsdatenrate auf der Schnittstelle (S1) zwischen aGW und Basisstation eNB (Transmitted Bit Rate)

MBR - Rate, mit der Datenpakete von dem aGW markiert werden (Mark Bit Rate)

IBR - eingehende Datenrate seitens des IP-Netzwerkes (Incomming Bit Rate)

n - Anzahl Datenpakete

Diese Datenraten sind in der FIG 6 beispielhaft den Komponenten und Schnittstellen zugeordnet.

Für den Fall einer Blockierung sollte MBR wie folgt berechnet werden:

$$MBR(n) = ABR(n-1) - MinBR$$

Datenpakete werden also von dem aGW mit der Datenrate TBR zu der Basisstation eNB übertragen, darüber hinausgehende Datenpakete werden hingegen bereits in dem aGW verworfen. Ferner werden Datenpakete bis zur Datenrate ABR zum potenzielle Verwerfen markiert, sodass sie bei Bedarf zusätzlich von der Basisstation eNB verworfen werden können, beispielsweise wenn die aktuell verfügbare Datenrate auf der Funkschnittstelle ABR kleiner der zu dem aGW signalisierten Datenrate ist. Ergänzend kann das aGW, wenn es beispielsweise über einen bestimmten Zeitraum keine Angaben über die aktuell verfügbare Datenrate mehr von der Basisstation eNB empfangen hat, ein Ende der Überlast bzw. der Blockierung annehmen und ein autonomes Verwerfen von Datenpaketen in dem aGW sowie gegebenenfalls ergänzend das Markieren von potenziell verwerfbaren Datenpaketen beenden.

Die vorstehend beschriebene alternative Ausführung kann auch ohne die weiteren beschriebenen Merkmale der Erfindung realisiert werden, sodass sie nicht zwingend in Kombination mit diesen weiteren Merkmalen verstanden werden muss.

## Patentansprüche

1. Verfahren zur Steuerung einer Übertragung von Datenpaketen in einem Funk-Kommunikationssystem, wobei das Funk-Kommunikationssystem zumindest einen zentralen Knoten (aGW) sowie zumindest eine mit diesem verbundene Basisstation (eNB) aufweist, und wobei die Basisstation (eNB) von dem zentralen Knoten (aGW) empfangene und von diesem mit einer Verschlüsselung versehene Datenpakete zu zumindest einem Teilnehmerendgerät (UE) über eine Funkschnittstelle überträgt, bei dem
die Basisstation (eNB) abhängig von einem aktuellen oder erwarteten Lastzustand eine erste Anzahl von Datenpaketen vor einer Übertragung über die Funkschnittstelle verwirft,
**dadurch gekennzeichnet, dass**
einer zweiten Anzahl der zu dem Teilnehmerendgerät (UE) zu übertragenden Datenpakete in dem zentralen Knoten (aGW) nach der Verschlüsselung eine jeweilige erste Information (DE) hinzugefügt wird, und die Basisstation (eNB) abhängig von der ersten Information (DE) ein jeweiliges Datenpaket verwirft oder nicht, und
die Basisstation (eNB) dem zentralen Knoten (aGW) eine zweite Information (BOP) über den aktuellen oder erwarteten Lastzustand signalisiert, und
der zentrale Knoten (aGW) abhängig von der zweiten Information (BOP) über den Lastzustand die ersten Informationen (DE) zu der zweiten Anzahl verschlüsselter Datenpakete hinzufügt.

**2.** Verfahren nach Anspruch 1, bei dem
der zentrale Knoten (aGW) abhängig von der zweiten Information (BOP) über den Lastzustand eine dritte Anzahl der zu dem Teilnehmerendgerät (UE) zu übertragenden Datenpakete vor einer Weiterleitung zu der Basisstation (eNB) verwirft.

**3.** Verfahren nach Anspruch 2, bei dem
der zentrale Knoten (aGW) ein Verhältnis der dritten Anzahl zu der zweiten Anzahl Datenpakete abhängig von der zweiten Information (BOP) wählt.

**4.** Verfahren nach einem der vorstehenden Ansprüche, bei dem
der aktuelle oder erwartete Lastzustand abhängig von einem Status eines Speichers zum Zwischenspeichern der verschlüsselten Datenpakete bestimmt wird.

**5.** Verfahren nach einem der vorstehenden Ansprüche, bei dem
der zentrale Knoten (aGW) nur eine erste Information (DE) zu Datenpaketen hinzufügt, welche von der Basisstation (eNB) verworfen werden können.

**6.** Funk-Kommunikationssystem, aufweisend
zumindest einen zentralen Knoten (aGW) sowie zumindest eine mit diesem verbundene Basisstation (eNB), bei dem der zumindest eine Knoten (aGW) Mittel zum Empfangen von Datenpaketen einer Verbindung zu zumindest einem Teilnehmerendgerät (UE), zum Verschlüsseln der Datenpakete und zum Übertragen der verschlüsselten Datenpakete zu der zumindest einen Basisstation (eNB) aufweist, und
die zumindest eine Basisstation (eNB) Mittel zum Empfangen der verschlüsselten Datenpakete, zum Verwerfen einer ersten Anzahl von Datenpaketen abhängig von einem aktuellen oder erwarteten Lastzustand und zum Übertragen der verschlüsselten Datenpakete zu dem zumindest einen Teilnehmerendgerät (UE) über eine Funkschnittstelle aufweist, **gekennzeichnet dadurch, dass**
der zumindest eine Knoten (aGW) ferner Mittel zum Hinzufügen einer jeweiligen ersten Information (DE) zu einer zweiten Anzahl der zu dem Teilnehmerendgerät (UE) zu übertragenden verschlüsselten Datenpakete aufweist, und die Mittel zum Verwerfen in der zumindest einen Basisstation (eNB) derart ausgestaltet sind, dass ein jeweiliges Datenpaket abhängig von der ersten Information (DE) verworfen wird oder nicht, und
die zumindest eine Basisstation (eNB) ferner Mittel aufweist, um dem zentralen Knoten (aGW) eine zweite Information (BOP) über den aktuellen oder erwarteten Lastzustand zu signalisieren, und der zumindest eine Knoten (aGW) ferner Mittel aufweist, um abhängig von der erhaltenen zweiten Information (BOP) über das Hinzufügen der ersten Informationen zu der zweiten Anzahl verschlüsselter Datenpakete zu entscheiden.

**7.** Knoten (aGW) eines Funk-Kommunikationssystems, aufweisend Mittel zum Empfangen von Datenpaketen einer Verbindung zu zumindest einem Teilnehmerendgerät (UE), zum Verschlüsseln der Datenpakete und zum Übertragen der verschlüsselten Datenpakete zu zumindest einer Basisstation (eNB) des Funk-Kommunikationssystems,
**gekennzeichnet durch**
ferner Mittel zum Auswerten einer erhaltenen zweiten Information (BOP) von der Zumindest einen Basisstation (eNB) über den aktuellen oder erwarteten Lastzustand in der zumindest einen Basisstation (eNB) und ferner Mittel zum Hinzufügen einer jeweiligen ersten Information (DE), abhängig von der erhaltenen zweiten Information (BOP), zu einer zweiten Anzahl der zu dem Teilnehmerendgerät (UE) zu übertragenden verschlüsselten Datenpakete.

**8.** Knoten (aGW) nach Anspruch 7, ferner aufweisend Mittel zum Verwerfen einer dritten Anzahl von Datenpaketen von einer Neiterleitung zu der zumindest einen Bassistation (eNB) in Abhängigkeit von der empfangenen zweiten Information (BOF).

**9.** Basisstation (eNB) eines Funk-Kommunikationssystems, aufweisend
Mittel zum Empfangen von verschlüsselten Datenpaketen einer Verbindung von einem zentralen Knoten (aGW) des Funk-Kommunikationssystems,
Mittel zum Auswerten einer seitens des zentralen Knotens (aGW) einer zweiten Anzahl von verschlüsselten Datenpaketen jeweils hinzugefügten ersten Information (DE),
Mittel zum Verwerfen einer ersten Anzahl verschlüsselter Datenpakete abhängig von der ersten Information (DE), und Mittel zum Übertragen der nicht verworfenen verschlüsselten Datenpakete zu zumindest einem Teilnehmerendgerät (UE) über eine Funkschnittstelle),
**gekennzeichnet durch**
ferner Mittel zum Erkennen eines internen aktuellen oder erwarteten Lastzustands und
ferner Mittel zum Signalisieren einer zweiten Information (BOP) über diesen aktuellen oder erwarteten Lastzustand an den zentralen Knoten (aGW) wobei die erste Information (DE) der Zweiten Anzahl von verschlüsselten Datenpaketen abhängig von der zweiten Information (BoP) hinzugefïgt ist.

**10.** Basisstation (eNB) nach Anspruch 9, ferner aufweisend Mittel zum Speichern von dem zentralen Knoten (aGW) empfangenen verschlüsselten Datenpaketen.

**Claims**

**1.** Method for controlling transmission of data packets in a radio communication system, wherein the radio communication system has at least one central node (aGW) and at least one base station (eNB) which is connected to it, and with the base station (eNB) transmitting data packets which have been received from the central node (aGW) and have been encrypted by said node to at least one subscriber terminal (UE) via a radio interface, in which
the base station (eNB) discards a first number of the data packets, before transmission via the radio interface, depending on a current or expected load state,
**characterized in that**
a second number of data packets to be transmitted to the subscriber terminal (UE) have a respective first information item (DE) added to them, after encryption, in the central node (aGW) and the base station (eNB) discards or does not discard a respective data packet depending on the first information item (DE) and the base station (eNB) signals to the central node (aGW) a second information item (BOP) relating to the current or expected load state and the central node (aGW) adds the first information items (DE) to the second number of encrypted data packets depending on the second information item (BOP) relating to the load state.

**2.** Method according to Claim 1, in which
the central node (aGW) discards a third number of the data packets to be transmitted to the subscriber terminal (UE), before passing on to the base station (eNB) depending on the second information item (BOP) relating to the load state.

**3.** The method according to Claim 2, in which
the central node (aGW) selects a ratio of the third number to the second number of data packets depending on the second information item (BOP).

**4.** Method according to one of the preceding claims, in which
the current or expected load state is determined depending on the state of a memory for temporary storage of the encrypted data packets.

**5.** Method according to one of the preceding claims, in which
the central node (aGW) adds only a first information item (DE) to data packets which can be discarded by the base station (eNB).

**6.** Radio communication system, having
at least one central node (aGW) and at least one base station (eNB) which is connected to it, in which
the at least one node (aGW) has means for reception of data packets of a connection to at least one subscriber terminal (UE), for encryption of the data packets and for transmission of the encrypted data packets to the at least one base station (eNB), and
the at least one base station (eNB) has means for reception of the encrypted data packets, for discarding of a first number of data packets depending on a current or expected load state and for transmission of the encrypted data packets to the at least one subscriber terminal (UE) via a radio interface, **characterized in that** the at least one node (aGW) furthermore has means for addition of a respective first information item (DE) to a second number of the encrypted data packets to be transmitted to the subscriber terminal (UE), and the means for discarding in the at least one base station (eNB) are designed such that a respective data packet is discarded or is not discarded depending on the first information item (DE), and the at least one base station (eNB) furthermore has means for signaling a second information item (BOP) relating to the current or expected load state to the central node (aGW), and the at least one node (aGW) furthermore has means for deciding on the addition of the first information items to the second number of encrypted data packets depending on the second information item (BOP) received.

**7.** Node (aGW) in a radio communication system, having means for reception of the data packets of a connection to at least one subscriber terminal (UE), for encryption of the data packets and for transmission of the encrypted data packets to at least one base station (eNB) in the radio communication system,
**characterized by**
furthermore means for evaluation of a second information item (BOP) received from the at least one base station (eNB) relating to the current or expected load state in the at least one base station (eNB) and
furthermore means for addition of a respective first information item (DE), depending on the second information item (BOP) received, to a second number of encrypted data packets to be transmitted to the subscriber terminal (UE).

**8.** Node (aGW) according to Claim 7, furthermore having means for discarding of a third number of data packets depending on the second received information item (BOP), before passing on to the at least one base station (eNB).

**9.** Base station (eNB) in a radio communication system, having means for reception of encrypted data packets of a connection from a central node (aGW) in the radio communication system, means for evaluation of a first information item (DE) which is respectively added by the central node (aGW) to a second number of encrypted data packets, means for discarding of a first number of encrypted data packets depending on the first information item (DE), and means for transmission of those encrypted data packets which have not been discarded to at least one subscriber terminal (UE) via a radio interface,
**characterized by**
furthermore means for identifying an internal current or expected load state and
furthermore means for signalling a second information item (BOP) relating to said current or expected load state to the central node (aGW), the first information item (DE) being added to the second number of encrypted data packets depending on the second information item (BOP).

**10.** Base station (eNB) according to Claim 9, furthermore having
means for storing of encrypted data packets received from the central node (aGW).

**Revendications**

**1.** Procédé de commande d'une transmission de paquets de données dans un système de radiocommunication, le système de radiocommunication comportant au moins un noeud central (aGW) et au moins une station de base (eNB) qui y est reliée, et la station de base (eNB) transmettant à au moins un terminal d'abonné (UE), via une interface radio, des paquets de données reçus du noeud central (aGW) et pourvus d'un cryptage par celui-ci, selon lequel la station de base (eNB) rejette, en fonction d'un état de charge actuel ou attendu, un premier nombre de paquets de données avant une transmission via l'interface radio, **caractérisé en ce que** :

- dans le noeud central (aGW), après le cryptage, une première information respective (DE) est ajoutée à un deuxième nombre de paquets de données à transmettre au terminal d'abonné (UE), et la station de base (eNB) rejette ou non un paquet de données respectif en fonction de la première information (DE) et
- la station de base (eNB) signale au noeud central (aGW) une deuxième information (BOP) sur l'état de charge actuel ou attendu et
- le noeud central (aGW) ajoute, en fonction de la deuxième information (BOP) sur l'état de charge, les premières informations (DE) au deuxième nombre de paquets de données cryptés.

**2.** Procédé selon la revendication 1, dans lequel le noeud central (aGW) rejette, en fonction de la deuxième information (BOP) sur l'état de charge et avant une retransmission vers la station de base (eNB), un troisième nombre de paquets de données à transmettre au terminal d'abonné (UE).

**3.** Procédé selon la revendication 2, selon lequel le noeud central (aGW) choisit en rapport entre le troisième nombre et le deuxième nombre de paquets de données en fonction de la deuxième information (BOP).

**4.** Procédé selon l'une des revendications précédentes, selon lequel l'état de charge actuel ou attendu est déterminé en fonction d'un statut d'une mémoire pour le stockage intermédiaire des paquets de données cryptés.

**5.** Procédé selon l'une des revendications précédentes, selon lequel le noeud central (aGW) ajoute uniquement une première information (DE) à des paquets de données qui peuvent être rejetés par la station de base (eNB).

**6.** Système de radiocommunication, comportant au moins un noeud central (aGW) ainsi qu'au moins une station de base (eNB) qui y est reliée, dans lequel :

- l'au moins un noeud (aGW) comporte des moyens pour recevoir des paquets de données d'une liaison vers au moins un terminal d'abonné (UE), pour crypter les paquets de données et pour transmettre les paquets de données cryptés à l'au moins une station de base (eNB) et
- l'au moins une station de base (eNB) comporte des moyens pour recevoir les paquets de données cryptés, pour rejeter un premier nombre de paquets de données en fonction d'un état de charge actuel ou attendu et pour transmettre les paquets de données cryptés à l'au moins un terminal d'abonné (UE) via une interface radio, **caractérisé en ce que** :
- l'au moins un noeud (aGW) comporte en outre des moyens pour ajouter une première information respective (DE) à un deuxième nombre de paquets de données cryptés à transmettre au terminal d'abonné (UE) et
- les moyens de rejet sont configurés de manière telle, dans l'au moins une station de base (eNB), qu'un paquet de données respectif est rejeté ou non en fonction de la première information (DE) et
- l'au moins une station de base (eNB) comporte en outre des moyens pour signaler au noeud central (aGW) une deuxième information (BOP) sur l'état de charge actuel ou attendu et l'au moins un noeud (aGW) comporte en outre des moyens pour décider, en fonction de la deuxième information reçue (BOP), de l'ajout des premières informations au deuxième nombre de paquets de données cryptés.

**7.** Noeud (aGW) d'un système de radiocommunication, comportant des moyens pour recevoir des paquets de données d'une liaison vers au moins un terminal d'abonné (UE), pour crypter les paquets de données et pour transmettre les paquets de données cryptés à au moins une station de base (eNB) du système de radiocommunication, **caractérisé en outre par** des moyens pour évaluer une deuxième information reçue (BOP) de l'au moins une station de base (eNB) sur l'état de charge actuel ou attendu dans l'au moins une station de base (eNB) et en outre par des moyens pour ajouter une première information respective (DE), en fonction de la deuxième information reçue (BOP), à un deuxième nombre de paquets de données cryptés à transmettre au terminal d'abonné (UE).

**8.** Noeud (aGW) selon la revendication 7, comportant en outre des moyens pour rejeter un troisième nombre de paquets de données avant une retransmission vers l'au moins une station de base (eNB) en fonction de la deuxième information reçue (BOP).

**9.** Station de base (eNB) d'un système de radiocommunication, comportant :

- des moyens pour recevoir des paquets de données cryptés d'une liaison d'un noeud central (aGW) du système de radiocommunication ;
- des moyens pour évaluer une première information (DE) ajoutée respectivement, du côté du noeud central (aGW), à un deuxième nombre de paquets de données cryptés ;
- des moyens pour rejeter un premier nombre de paquets de données cryptés en fonction de la première information (DE) ; et
- des moyens pour transmettre les paquets de données cryptés non rejetés à au moins un terminal d'abonné (UE) via une interface radio,

**caractérisée en outre par**

- des moyens pour reconnaître un état de charge interne actuel ou attendu et
- des moyens pour signaler au noeud central (aGW) une deuxième information (BOP) sur cet état de charge actuel ou attendu, la première information (DE) étant ajoutée au deuxième nombre de paquets de données cryptés en fonction de la deuxième information (BOP).

**10.** Station de base (eNB) selon la revendication 9, comportant en outre des moyens pour stocker des paquets de données cryptés reçus du noeud central (aGW).

FIG 1

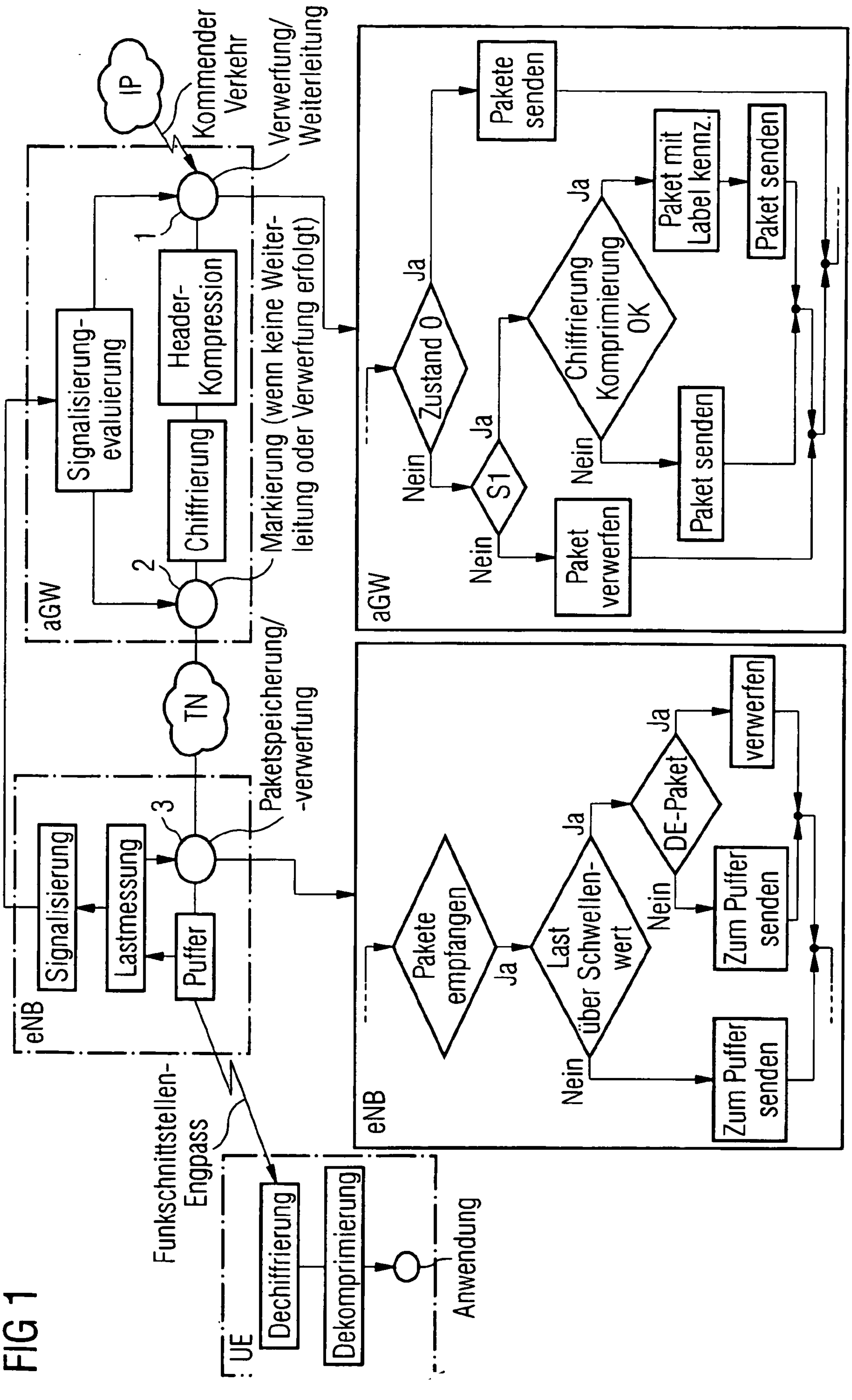
IP
Kommender Verkehr
Verwerfung/ Weiterleitung
aGW
Signalisierung-evaluierung
Header-Kompression
Chiffrierung
1
2
Markierung (wenn keine Weiterleitung oder Verwerfung erfolgt)
TN
eNB
Signalisierung
Lastmessung
Puffer
3
Paketspeicherung/ -verwerfung
Funkschnittstellen-Engpass
UE
Dechiffrierung
Dekomprimierung
Anwendung
Zustand 0
Ja
Nein
Pakete senden
S1
Chiffrierung Komprimierung OK
Paket mit Label kennz.
Paket senden
Paket verwerfen
Pakete empfangen
Last über Schwellenwert
DE-Paket
verwerfen
Zum Puffer senden

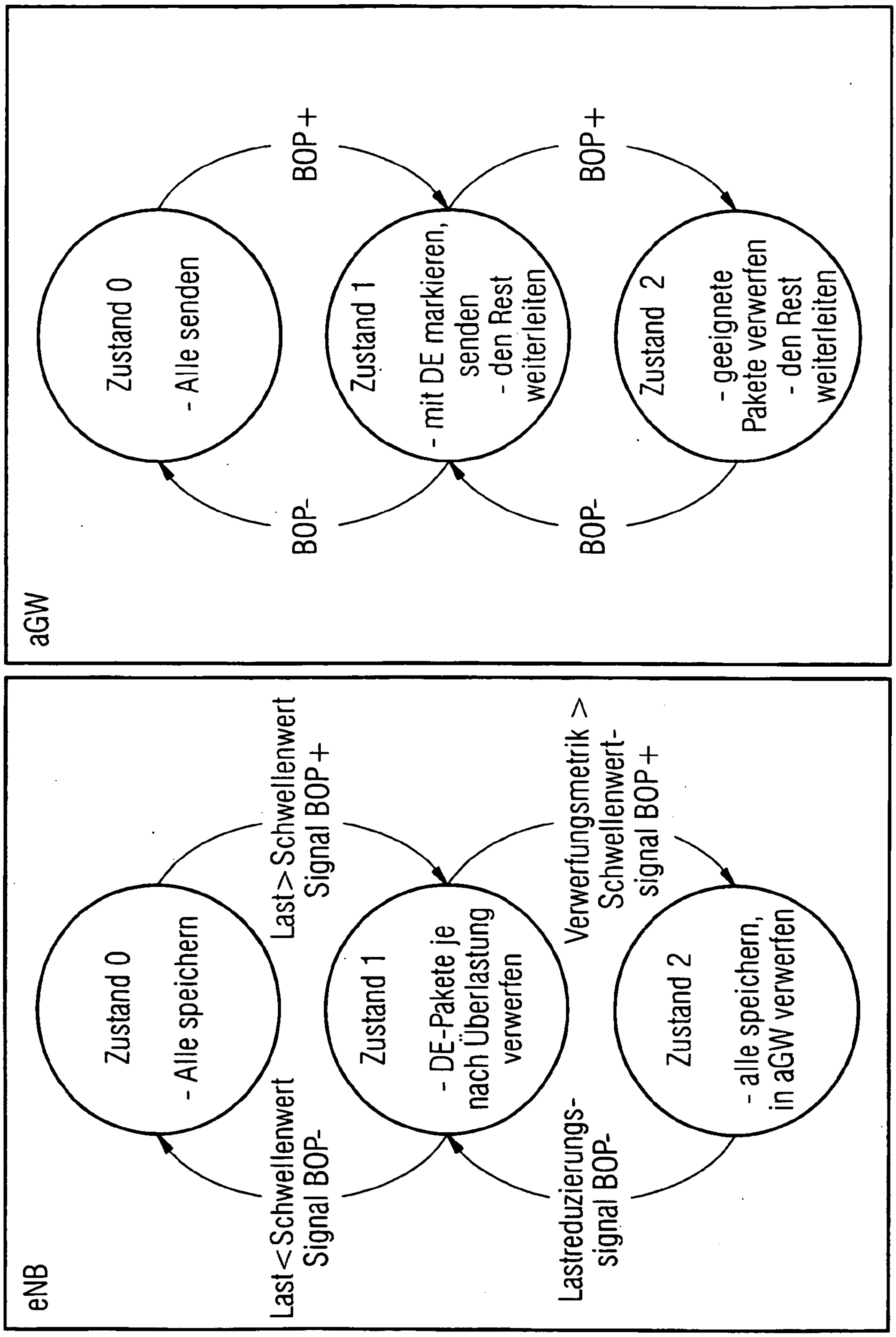
eNB
Zustand 0
- Alle speichern
Last>Schwellenwert Signal BOP+
Last<Schwellenwert Signal BOP-
Zustand 1
- DE-Pakete je nach Überlastung verwerfen
Verwerfungsmetrik > Schwellenwert-signal BOP+
Lastreduzierungs-signal BOP-
Zustand 2
- alle speichern, in aGW verwerfen
aGW
Zustand 0
- Alle senden
BOP+
BOP-
Zustand 1
- mit DE markieren, senden
- den Rest weiterleiten
BOP+
BOP-
Zustand 2
- geeignete Pakete verwerfen
- den Rest weiterleiten

FIG 2

FIG 3

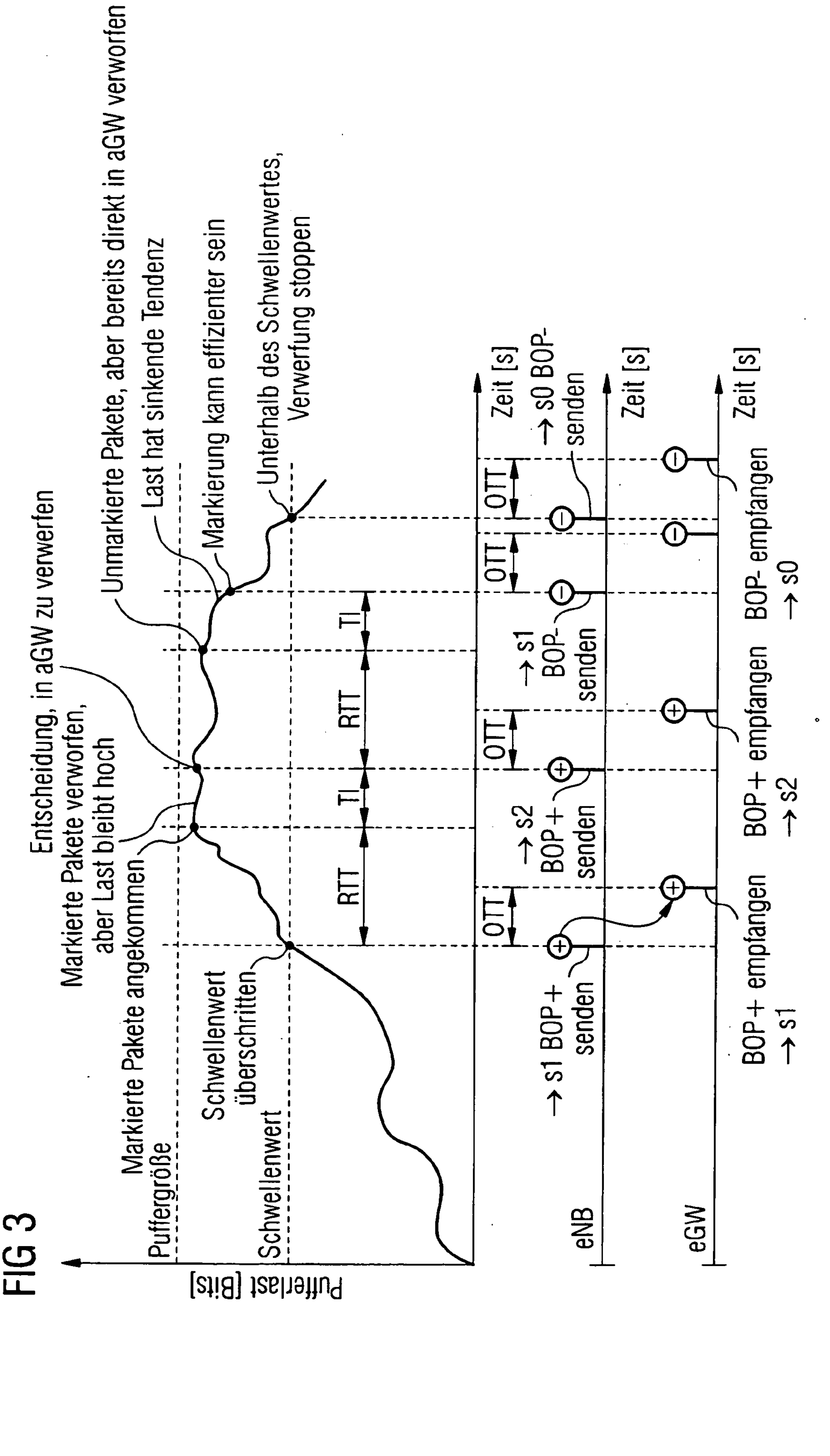
Pufferlast [Bits]
Puffergröße
Schwellenwert
Schwellenwert
Schwellenwert überschritten
Markierte Pakete angekommen
Markierte Pakete verworfen, aber Last bleibt hoch
Entscheidung, in aGW zu verwerfen
Unmarkierte Pakete, aber bereits direkt in aGW verworfen
Last hat sinkende Tendenz
Markierung kann effizienter sein
Unterhalb des Schwellenwertes, Verwerfung stoppen
RTT
TI
RTT
TI
OTT
OTT
OTT
OTT
Zeit [s]
eNB
→ s1 BOP+ senden
→ s2 BOP+ senden
→ s1 BOP- senden
→ s0 BOP- senden
Zeit [s]
eGW
BOP+ empfangen → s1
BOP+ empfangen → s2
BOP- empfangen → s0
Zeit [s]

FIG 4

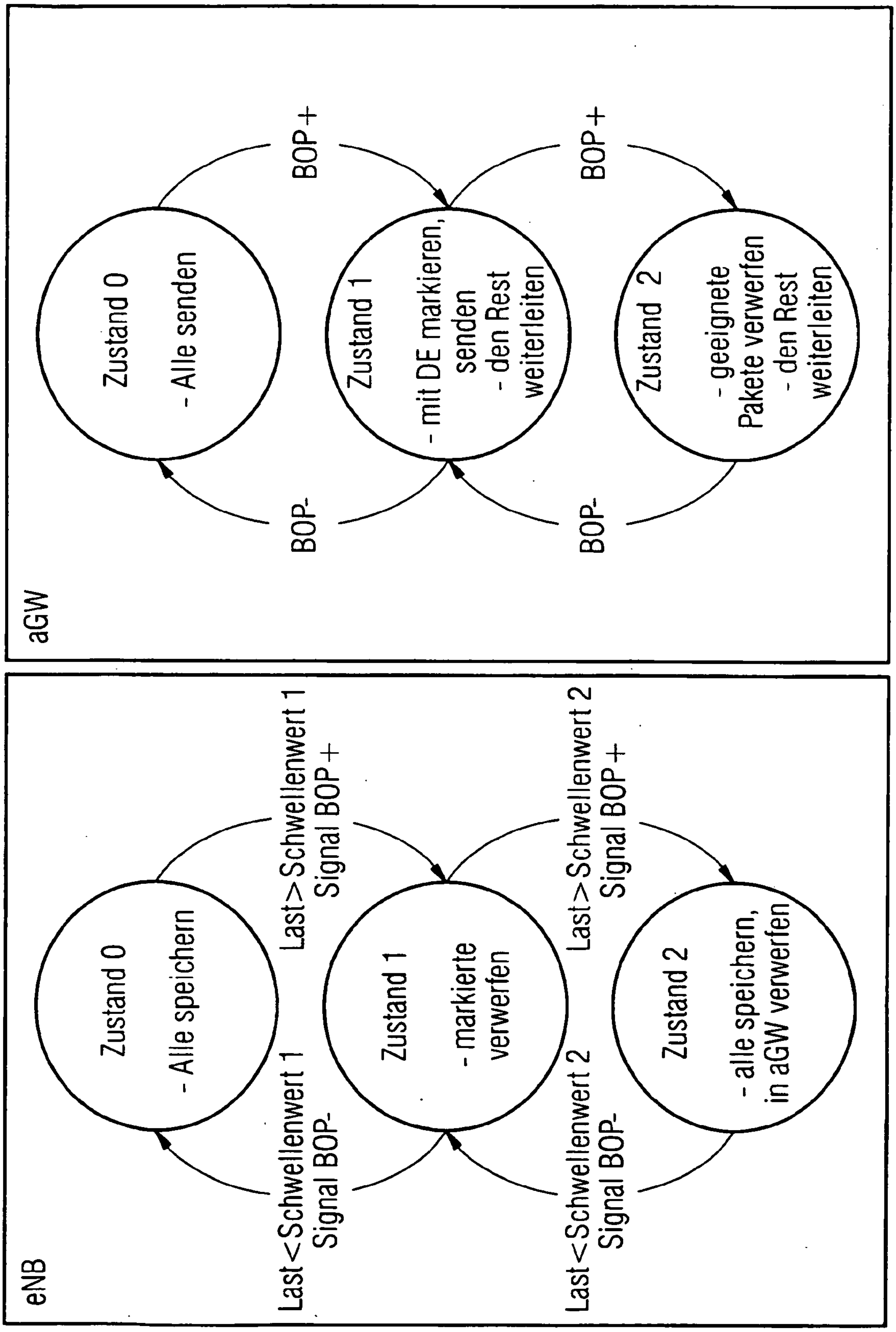
eNB
Zustand 0
- Alle speichern
Zustand 1
- markierte verwerfen
Zustand 2
- alle speichern, in aGW verwerfen
Last>Schwellenwert 1
Signal BOP+
Last<Schwellenwert 1
Signal BOP-
Last>Schwellenwert 2
Signal BOP+
Last<Schwellenwert 2
Signal BOP-
aGW
Zustand 0
- Alle senden
Zustand 1
- mit DE markieren, senden
- den Rest weiterleiten
Zustand 2
- geeignete Pakete verwerfen
- den Rest weiterleiten
BOP+
BOP-
BOP+
BOP-

FIG 5

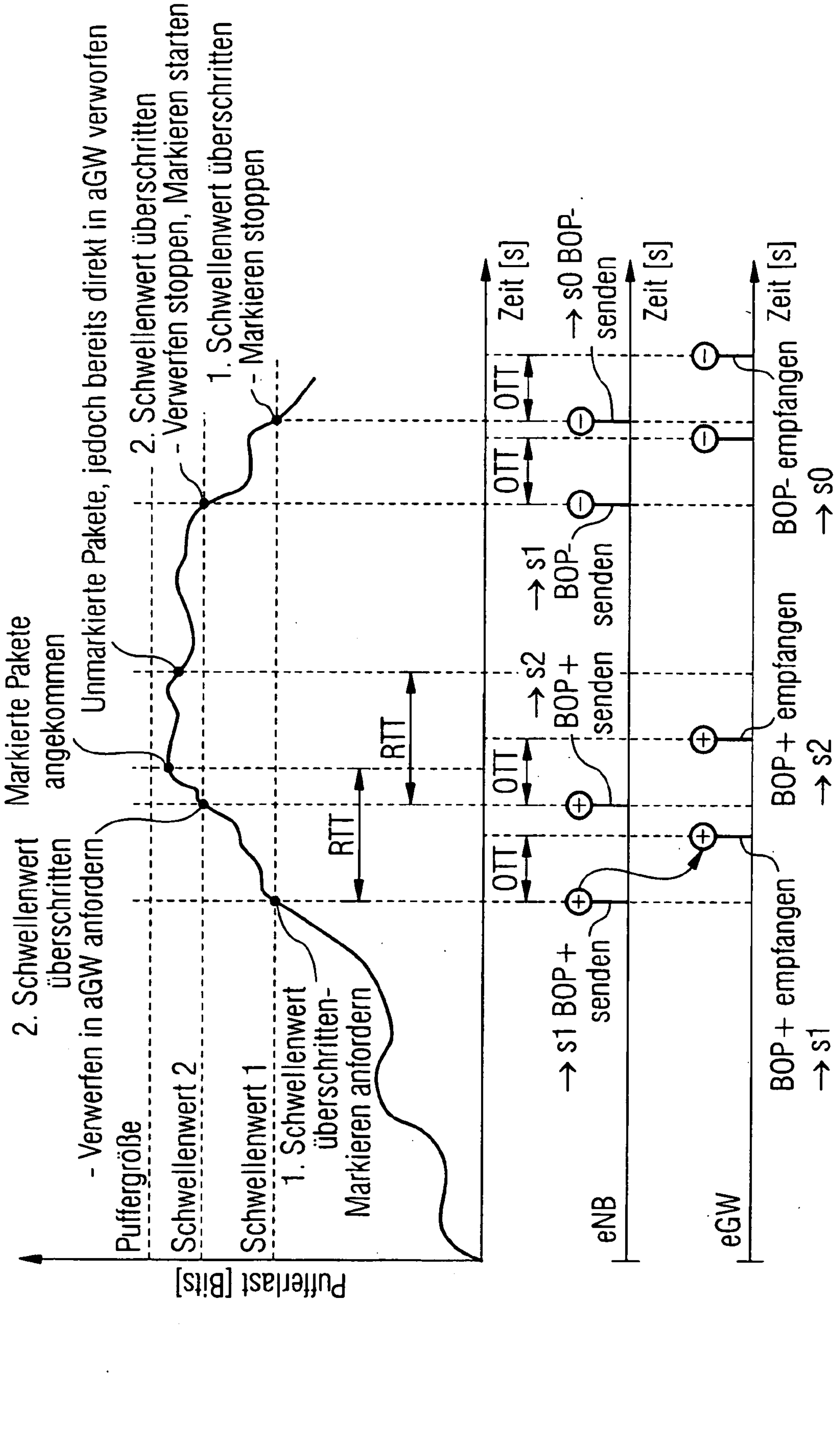
Pufferlast [Bits]
Puffergröße
Schwellenwert 2
Schwellenwert 1
2. Schwellenwert überschritten
- Verwerfen in aGW anfordern
1. Schwellenwert überschritten-
Markieren anfordern
Markierte Pakete angekommen
Unmarkierte Pakete, jedoch bereits direkt in aGW verworfen
2. Schwellenwert überschritten
- Verwerfen stoppen, Markieren starten
1. Schwellenwert überschritten
- Markieren stoppen
RTT
RTT
OTT
OTT
OTT
OTT
Zeit [s]
Zeit [s]
Zeit [s]
eNB
eGW
→ s1 BOP+ senden
→ s2 BOP+ senden
→ s1 BOP- senden
→ s0 BOP- senden
BOP+ empfangen → s1
BOP+ empfangen → s2
BOP- empfangen → s0

FIG 6

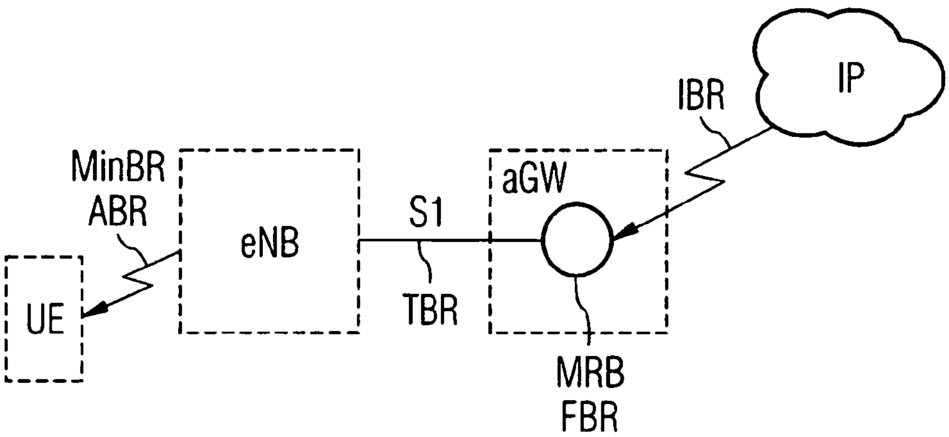

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- WO 03049387 A1